# EUROPEAN PATENT SPECIFICATION

(11) **EP 4 453 060 B1**
(45) Date of publication and mention of the grant of the patent: **11.02.2026**
(21) Application number: 22840135.2
(22) Date of filing: 19.12.2022
(51) Int. Cl.: C08G 59/50, C08G 59/24, C08G 59/32, C08G 59/38, C08G 59/68

(54) **PROCESS FOR PREPARING A RESHAPABLE THERMOSET RESIN MATERIAL**
VERFAHREN ZUR HERSTELLUNG EINES UMFORMBAREN WÄRMEHÄRTBAREN HARZMATERIALS
PROCÉDÉ DE PRÉPARATION D'UN MATÉRIAU DE RÉSINE THERMODURCIE REPROFILABLE

(30) Priority: 22.12.2021 IN 202121060075; 10.02.2022 EP 22156152
(43) Date of publication of application: 30.10.2024
(73) Proprietor: SYENSQO SA, 1130 Brussels (BE)
(72) Inventor: SOOD, Rakhi, Vadodara, Gujarat 391770 (IN); VALODKAR, Vinayak, Vadodara, 390001 (IN); DARJI, Hemang, Vadodara, Gujarat 390010 (IN); REVEST, Xavier, 75018 Paris (FR)
(74) Representative: Kraus & Lederer PartGmbB
(86) International application number: PCT/EP2022/086691
(87) International publication number: WO 2023/117933

(56) References cited:
- CN-A- 110 746 582
- CN-A- 111 662 617

## Description

### TECHNICAL FIELD

The present invention relates to a process for preparing a reshapable thermoset resin material.

### BACKGROUND ART

Thermoset resin materials are the materials that will undergo or have undergone a chemical reaction by the action of heat, catalyst, ultraviolet light etc., resulting in a relatively infusable state, meaning that these materials have a high melting point and cannot be easily melted. Their use has developed in recent years due to the cross-linking which is formed during the curing process. Curing is a process during which a chemical reaction takes place, so as to produce the toughening of hardening of the resin. The curing may be induced by UV or under the action of heat, or by the use of additives, commonly referred to as curing agents or hardeners. The cross-linking process eliminates the risk of the product re-melting when heat is applied and these materials are becoming essential in the sectors of coating, adhesives, electronic laminates (such as used in the fabrication of printed circuit boards), electrical insulators, electronics, appliances and automotive parts (such as leaf springs, pumps and electrical components).

Thermoset resin materials generally exhibit better thermo-mechanical properties and chemical resistance than thermoplastic materials due to their chemically cross-linked nature. The commonly utilized thermoset resin materials include vulcanized rubber, fiber-reinforced polymer composite, polyester resin, polyurethane, melamine and epoxy resin.

In particular, epoxies offer certain advantages over other materials such as low density, tack, drape, processability and low cost. Thermoset epoxy materials are derived from epoxy resins that are polymerized in the presence of a co-reactive curing agent (also known as hardener), a catalytic curing agent (also known as accelerator or catalyst) or both to afford a cured thermoset material. Owing to its outstanding integrated performance, epoxy resin has been widely used to produce various coatings, composites and adhesives for almost all industrial fields including aerospace, new energy, electronic information, insulation etc., For example, epoxy resins have occupied over 90% usage of packaging resins in integrated circuits and semiconductors, and the demand of epoxy resins in the electronic information industry is anticipated to grow each year.

Generally, the agents for curing epoxy resins may include a hardener such as polyamines, acid anhydrides, phenols or the like, and a curing catalyst such as boron trifluoride (BF₃) complexes, dicyandiamide, dibasic acid hydrazide, tertiary amines, imidazole compounds or the like. However, major drawback of these materials is that they are poor in corrosion resistance and have inadequate electrical and mechanical properties at high temperatures.

Due to the crosslinking structure of molecular segments, once these materials were cross-linked, it could not be repaired or dissolved when the thermoset materials were cured and the high cost fillers which doped in it could not be recycled. Moreover, thermoset materials are difficult to reshape. So far, it is difficult to make thermoset material with high mechanical strength that can be easily melted and reshaped multiple times.

It has been desired from the view point of resource recycling that after using thermoset resin materials in automobiles, appliances, electronics etc., should be reverted and reshaped again to be reused. As thermoset resin material undergo irreversible chemical changes, cross-linking during processing, they are difficult to reshape by conventional methods. This is why, in recent years, the players in this field concerned, have wanted to develop a thermoset resin material having excellent reshapable property that can be reused several times without the loss of thermal and mechanical properties for the sake of sustainable development.

Several approaches can be found in the literature to prepare thermoset materials. A method to prepare thermoplastic or thermoset reshapable soft polyurethanes is described by Chen Hong M., Journal of Polymer Research, 2021, 28:201*.* In this document, a unified method is proposed to synthesize different reshapable polyurethanes. Polyethylene glycol (PEG) diol is chosen as the soft segment, polycaprolactone (PCL) diol as the hard segment, and hexamethylene diisocyanate (HDI) as the chain extender to link PEG and PCL. The polyurethanes with a NCO/OH ratio of 1.2 are thermoplastic while the ones with NCO/OH ratio 2.4 are thermoset. All polyurethanes are soft and can be reshaped around room temperature. However, this process has many drawbacks including low tensile strength and low glass transition (T_{g}) values of thermoset polyurethanes which has limited deformability and reprocessability. Moreover, such thermoset polyurethanes are not suitable for high performance space applications.

CN 110 746 582 A relates to a process for manufacturing reshapable epoxy resins, the process comprising the steps of uniformly stirring an epoxy resin, a curing agent, a modifier and a catalyst, carrying out a reaction at the temperature of 80°C to 150 °C under a vacuum condition, and naturally cooling to obtain an epoxy resin shape memory polymer. A benzotriazole compound is not disclosed.

An epoxy thermoset containing dynamic silyl ether bonds and possessing good shape memory and reprocessing ability is described by Qinfeng Liu, Macromol. Chem. Phys., 2019, 220, 1900149*.* In this document, bisphenol A epoxy resin and polypropylene glycol diglycidyl ether are used together and the epoxy resin is reacted with a coupling agent ((3-aminopropyl) triethoxysilane) to produce epoxy thermoset materials. The resulting thermoset epoxy resin possess good reprocessing, reshaping and shape memory ability. However, this method suffers from several drawbacks. Firstly, the process involves the use of solvents like ethanol and potassium hydroxide to obtain the epoxy thermoset material, which leads to development of impurities and needs purification. Then the obtained materials have very low glass transition (T_{g}) temperature and tensile strength. Also these materials have very poor thermo-mechanical stability. All in all, such epoxy thermoset materials have low shape recovery, poor repeatability and small strain which make them unsuitable to use.

Therefore, according to the previously described prior art, there is a need to overcome the drawbacks of the processes of the prior art and in particular to make a thermoset resin material with fast curing kinetics, having high glass transition temperature (T_{g}), high tensile strength, solvent resistance and high thermomechanical stability with reshapable property that can be prepared by a simple process without the use of any solvent.

### SUMMARY

The above drawbacks are now overcome by a first aspect of the present invention which relates to a process for preparing a reshapable thermoset resin material comprising curing epoxy resin wherein curing is carried out with (a) at least one imidazole compound and (b) at least one benzotriazole compound.

A second aspect of the present invention relates to a reshapable thermoset material obtained by the process according to the present invention.

These and other features, aspects and advantages of the present subject matter will be better understood with reference to the following description and appended claims.

### DETAILED DESCRIPTION

Those skilled in the art will be aware that the present disclosure is subject to variations and modifications other than those specifically described. It is to be understood that the present disclosure includes all such variations and modifications. The disclosure also includes all such steps, features, compositions and compounds referred to or indicated in this specification, individually or collectively and any and all combinations of any or more of such steps or features.

### Definitions

For convenience, before further description of the present disclosure, certain terms employed in the specification, and examples are collected here. These definitions should be read in the light of the remainder of the disclosure and understood as by a person of skill in the art. The terms used herein have the meanings recognized and known to those of skill in the art, however, for convenience and completeness, particular terms and their meanings are set forth below.

The articles "a", "an" and "the" are used to refer to one or to more than one (i.e., to at least one) of the grammatical object of the article.

The term "and/or" includes the meanings "and" and "or".

The terms "comprise", "include", "comprising" and "including" are used in the inclusive, open sense, meaning that additional elements may be included. Throughout this specification, unless the context requires otherwise, these terms and variations thereof, such as "comprises", will be understood to imply the inclusion of a stated element or step or group of element or steps but not the exclusion of any other element or step or group of element or steps. The term "including" is used to mean "including but not limited to". "Including" and "including but not limited to" are used interchangeably.

Ratios, concentrations, amounts, and other numerical data may be presented herein in a range format. It is to be understood that such range format is used merely for convenience and brevity and should be interpreted flexibly to include not only the numerical values explicitly recited as the limits of the range, but also to include all the individual numerical values or sub-ranges encompassed within that range as if each numerical value and sub-range is explicitly recited. For example, a temperature range of from 60 °C to 180 °C should be interpreted to include not only the explicitly recited range of 60 °C to 180 °C, but also to include sub-ranges, such as 80 °C to 110 °C, 150 °C to 160 °C, and so forth, as well as individual amounts, including fractional amounts, within the specified ranges, such as 135°C and 175.5 °C.

The present invention provides a process for preparing a reshapable thermoset resin material comprising curing epoxy resin wherein curing is carried out with (a) at least one imidazole compound and (b) at least one benzotriazole compound.

The present invention also provides a reshapable thermoset resin material obtained by the process of the invention.

The term "reshapable" used, within the frame of the present invention refers to a property of a thermoset resin material with which it is possible to reshape the thermoset resin material again and again by heating without losing its thermal and mechanical properties. A thermoset resin material is generally a liquid or malleable material at room temperature which hardens irreversibly upon heating or chemical addition. During heating or chemical addition, it forms certain bonds, called crosslinks, which hold the molecules in place and change the basic nature of the material, preventing it from melting. This process is called curing and as a result, a thermoset resin material cannot be melted and reshaped after it is cured. With reshapable property, it is possible to use thermoset resin materials without the loss of its thermal and mechanical properties such as glass transition temperature (T_{g}), tensile strength, fracture strain, storage modulus, thermal decomposition temperature. Such thermoset resin materials with reshapable property are strong, fully reprocessable and recyclable and can be used in different sectors like coating, adhesives, electronic laminates (such as used in the fabrication of printed circuit boards), electrical insulators, electronics, appliances and automotive parts (such as leaf springs, pumps and electrical components).

Within the context of the present invention, the expression "curable epoxy resin" is used according to its usual meaning, i.e. to designate polymers comprising a plurality of epoxy groups, which may generate three-dimensional cross-linked thermoset structures by reaction of the said epoxy groups with each other and/or by reaction of the same with suitable curing agents. As used herein, "epoxy group" means a vicinal epoxy group, i.e., a 1,2-epoxy group. The epoxy resin used according to the present invention may be any conventional epoxy resins.

Examples of the epoxy resin are glycidyl ether type epoxy resins which are prepared by the reaction of epichlorohydrin with polyhydric phenols such as bisphenol A, bisphenol F. bisphenol S, hexahydrobisphenol A, tetramethylbisphenol A, pyrocatechol, resorcinol, cresol, novolak, tetrabromobisphenol A, trihydroxybiphenyl, bisresorcinol, bisphenolhexafluoroacetone, tetramethylbisphenol F, bixylenol; polyglycidyl ether type epoxy resins which are prepared by the reaction of epichlorohydrin with polyhydric (cyclo)aliphatic alcohols such as glycerol, neopentyl glycol, ethylene glycol, propylene glycol, butylene glycol, hexylene glycol, polyethylene glycol, polypropylene glycol; glycidyl ether ester type epoxy resins which is prepared by the reaction of epichlorohydrin with hydroxycarboxylic acids such as p-oxybenzoic acid, β-oxynaphthoic acid; polyglycidyl ester type epoxy resins which are derived from polybasic carboxylic acids such as phthalic acid, methylphthalic acid, isophthalic acid, terephthalic acid, tetrahydrophthalic acid, hexahydrophthalic acid, endomethylenetetrahydrophthalic acid, endomethylenehexahydrophthalic acid, trimellitic acid, polymeric aliphatic acids; glycidyl aminoglycidyl ether type epoxy resins which are derived from aminophenol, aminoalkylphenols; glycidyl aminoglycidyl ester type epoxy resins which are derived from aminobenzoic acid; glycidylamine type epoxy resins which are derived from aniline, toluidine, tribromoaniline, xylylenediamine, diaminocyclohexane, bisaminomethylcyclohexane, 4,4'-diaminodiphenylmethane, 4,4'-diaminodiphenylsulfone; epoxydized polyolefins, glycidyl hydantoin, glycidyl alkylhydantoins, triglycidyl cyanurate; monoepoxy compounds such as butyl glycidyl ether, phenyl glycidyl ether, alkylphenyl glycidyl ethers, glycidyl benzoate, styrene oxide; and the like. They may be used independently or in admixture of two or more of them. Epoxy resin may be obtained according to methods known to those of ordinary skilled in the art.

In the context of the present invention, the epoxy resin can comprise one or more epoxy resins. Typically, the epoxy resin of the present invention is a mixture of epoxy resins.

In some embodiments, the epoxy resin may advantageously be selected from bifunctional epoxy resin, trifunctional epoxy resin, tetrafunctional epoxy resin or mixtures thereof.

In some embodiments, the epoxy resin is a compound having two epoxy groups such as a bifunctional epoxy resin. A bifunctional epoxy resin is generally an epoxy resin which is obtained from two functional epoxy groups (having two epoxy groups per molecule). Such epoxy resin can be aromatic, alicyclic or aliphatic. Preferred examples of bifunctional epoxy resin include bisphenol type epoxy resin, epoxy resin with a biphenyl backbone, epoxy resin with a naphthalene backbone, epoxy resin with a binaphthalene backbone and novolak type epoxy resins. More preferably bifunctional epoxy resin is bisphenol type epoxy resin and most preferably bifunctional epoxy resin is diglycidyl ether of bisphenol A (DGEBA).

In some enbodiments, the epoxy resin is a compound having three epoxy groups such as a trifunctional epoxy resin. A trifunctional epoxy resin is generally an epoxy resin which is obtained from three functional epoxy groups (having three epoxy groups per molecule). Such epoxy resin can be aromatic, alicyclic or aliphatic. Preferred examples of trifunctional epoxy resin include isocyanurate type epoxy resin and p-aminophenol type epoxy resin. More preferably trifunctional epoxy resin is aminophenol type epoxy resin and most preferably trifunctional epoxy resin is triglycidyl p-aminophenol (TGAP).

In some embodiments, the epoxy resin is a compound having four epoxy groups such as a tetrafunctional epoxy resin. A tetrafunctional epoxy resin is generally an epoxy resin which is obtained from four functional epoxy groups (having four epoxy groups per molecule). Such epoxy resin can be aromatic, alicyclic or aliphatic. Preferred examples of tetrafunctional epoxy resin include m-xylene diamine type epoxy resin and aminodiphenylmethane type epoxy resin.

In some preferred embodiments, the epoxy resin used in the invention is a mixture of bifunctional epoxy resin and trifunctional epoxy resin.

In one preferred embodiment, the epoxy resin is a mixture of diglycidyl ether of bisphenol A (DGEBA) and a trifunctional epoxy resin. In another embodiment, the epoxy resin is a mixture of bifunctional epoxy resin and triglycidyl para-aminophenol (TGAP).

In the most preferred embodiment, the epoxy resin is a mixture of diglycidyl ether of bisphenol A (DGEBA) and triglycidyl para-aminophenol (TGAP).

In some embodiments, epoxy resin optionally comprises other epoxy resin apart from the epoxy resin and/or mixture of epoxy resins of the present invention. Such epoxy resins are any conventional epoxy resins mentioned above.

The amount of bifunctional epoxy resin in the mixture of bifunctional epoxy resin and trifunctional epoxy resin is generally of at least 50 wt%, preferably at least 65 wt%, more preferably at least 80 wt% relative to the total quantity of the epoxy resins. Besides, it is preferably of at most 90 wt% and more preferably of at most 80 wt% relative to the total quantity of the epoxy resins in the mixture.

The amount of trifunctional epoxy resin in the mixture of bifunctional epoxy resin and trifunctional epoxy resin is generally of at least 10 wt%, preferably at least 25 wt%, more preferably at least 45 wt% relative to the total quantity of the epoxy resins. Besides, it is preferably of at most 65 wt% and more preferably of at most 50 wt% relative to the total quantity of the epoxy resins in the mixture.

In some embodiments of the present invention, the amount of bifunctional epoxy resin is from 50 wt% to 90 wt% and the amount of trifunctional epoxy resins is from 50 wt% to 10 wt% in the mixture. Preferably the amount of bifunctional epoxy resins is from 65 wt% to 80 wt% and the amount of trifunctional epoxy resins is from 35 wt% to 20 wt% in the mixture.

In some embodiments, the imidazole used in the present invention responds generally to the formula (A): 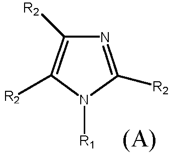 wherein R₁ and R₂, equal to or different from each other, are independently selected from the group consisting of hydrogen, halogen, carbonyl or a hydrocarbon, preferably a C₁-C₁₂ alkyl or cycloaliphatic, wherein the alkyl groups may be linear, branched or cyclic and aryl radicals, being optionally comprising one or more heteroatoms or heteroatom containing groups. Without being exhaustive suitable aryl group may be chosen among the list consisting of phenyl, tolyl, xylyl. etc.

Preferably R₁ is a C₁-C₁₂ alkyl group and R₂ is hydrogen, more preferably R₁ is methyl and R₂ is hydrogen, most preferably imidazole compound is 1-methyl imidazole.

In other embodiment, the imidazole used in the present invention is a benzimidazole compound having the formula (B): 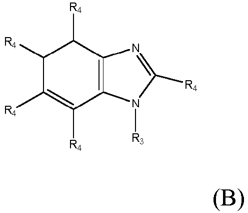 wherein R₃ and R₄, equal to or different from each other, are independently selected from the group consisting of hydrogen, halogen, carbonyl or a hydrocarbon, preferably a C₁-C₁₂ alkyl or cycloaliphatic, wherein the alkyl groups may be linear, branched or cyclic and aryl radicals, being optionally comprising one or more heteroatoms or heteroatom containing groups. Without being exhaustive suitable aryl group may be chosen among the list consisting of phenyl, tolyl, xylyl. etc.

Preferably R₃ is a C₁-C₁₂ alkyl group and R₄ is hydrogen, more preferably R₃ is methyl and R₄ is hydrogen, most preferably benzimidazole compound is 1-methyl benzimidazole.

The amount of imidazole compound used in the present invention is generally from 0.01 to 5 parts by weight per one hundred parts by weight of the epoxy resin, more preferably from 0.1 to 3.5 parts by weight per one hundred parts by weight of the epoxy resin, still more preferably from 0.5 to 2 parts by weight per one hundred parts by weight of the epoxy resin.

The amount of benzotriazole compound used in the present invention is generally from 1 to 65 parts by weight per one hundred parts by weight of the epoxy resin, more preferably from 5 to 50 parts by weight per one hundred parts by weight of the epoxy resin, still more preferably from 15 to 35 parts by weight per one hundred parts by weight of the epoxy resin.

In one embodiment of the present invention, epoxy resin, imidazole compound and benzotriazole compound are simultaneously mixed together.

In another embodiment of the present invention, imidazole compound and benzotriazole compound are mixed first and epoxy resin is added afterwards to the mixture.

In some embodiments of the present invention, epoxy resin and imidazole compound are mixed first and benzotriazole compound is added afterwards to the mixture.

In one preferred embodiments of the present invention, epoxy resin and benzotriazole compound are mixed first and imidazole compound is added afterwards to the mixture.

The epoxy resin, imidazole compound and benzotriazole compound used in the present invention can be advantageously dry mixed at room temperature followed by gentle heating. The mixing is performed by merely mixing without the use of any solvents. The imidazole compound and the benzotriazole compound can be soluble in the epoxy resin without the inclusion of any solvents. Without being bound by theory, the use of solvents can results in a decrease in the high heat properties of the corresponding cured thermoset material, involves an additional purification step to remove the impurities which are formed as a result of adding solvents and increases the working time of the whole process. In the method of the present invention, the reaction mixer is free of solvent.

The obtained mixture undergoes curing. Curing generally takes place first at room temperature which is the initial cure phase. This phase control the exotherm and helps in a homogeneous cross-linking of the reaction mixture. The mixture forms a gel state. This is followed by second curing at elevated temperature which may vary over a wide range. Preferably, the temperature of the second curing step ranges from 50 °C to 200 °C, more preferably temperature ranges from 80 °C to 160 °C. The second curing step is performed to complete the curing process and to cure of any remaining part of the mixture. The mixture is cured to a solid state and can be shaped. Curing mixture directly at the elevated temperature without forming the gel state will lower the viscosity, allowing the mixture to run or sag more easily.

Advantageously, various additives may be added in the mixture before cure, such as diluents, pigments, fillers, fibrous materials, dyes, resins, polyolefins, plasticizers, and non-volatile extenders such as coal tar, coal tar pitch and asphaltic bitumen, for example a blown bitumen or a cut-back bitumen prepared from an asphaltic bitumen and aromatic lube oil extract, pine oil, pine tar, lube oil and aromatic extracts thereof.

Advantageously, solvents can be added after mixing step of the epoxy resin, imidazole compound and the benzotriazole compound. Suitable solvents are ketones such as acetone, methyl cyclohexanone and diacetone alcohol; esters such as ethyl acetate and n-butyl acetate; glycol ethers such as ethylene glycol monomethyl ether, ethylene glycol monoethyl ether and the acetates thereof.

Curing of the epoxy resin can be achieved with or without the addition of other curing agent; it is nevertheless preferred to use other curing agents in combination with the curable epoxy resin. Herein the term "other curing agent" means a compound other than imidazole and benzotriazole of the curable epoxy resin, which can be used as a curing agent.

Common classes of curing agents for epoxy resins comprise amines (include polyamines), polyamidoamines, polyamides, acids, acid anhydrides, phenols, alcohols and thiols. Suitable curing agents can be selected from the curing agents for epoxy resins by any person of ordinary skills in this field, depending on the curable epoxy resin or mixture of resins chosen for use herein.

According to a preferred embodiment, curing agents are selected among those having only a limited or no reactivity at room temperature with the curable epoxy resin, but which are able to react with the epoxy groups of the curable epoxy resin at high temperature, so that the formulation of curable epoxy resin and curing agent may be prepared and stored for some time prior to use.

Advantageously, the curing takes place optionally in the presence of electrically or thermally conductive fillers or nonconductive fillers. Suitable conductive fillers are carbon black, graphite, gold, silver, copper, platinum, palladium, nickel, aluminum, silicon carbide, boron nitride, diamond and alumina. Suitable nonconductive fillers are particles of vermiculite, mica, wollastonite, calcium carbonate, titania, sand, glass, fused silica, fumed silica, barium sulfate and halogenated ethylene polymers such as trifluoroethylene, tetrafluoroethylene, vinylidene fluoride, vinyl fluoride, vinylidene chloride and vinyl chloride or combinations thereof.

The curing takes place advantageously, first at room temperature for 1h to 55h, preferably for 8h to 45h and more preferably for 15h to 35h. After the initial room temperature curing, it is further cured at a temperature of from 20 °C to 220 °C, preferably at a temperature of from 40 °C to 190 °C, more preferably at a temperature of from 60 °C to 180 °C.

The reshapable thermoset resin material is advantageously obtained by first heating an epoxy resin and a benzotriazole compound. This mixture is cooled to provide a resin mixture. The obtained resin mixture is then cooled at room temperature to further avoid the cross-linking reaction. After the mixture is completely cooled down, an imidazole compound is added to the resin mixture and mixed thoroughly. The resulting mixture is degassed under vacuum to obtain the final resin mixture which is cured to obtain the reshapable thermoset resin material.

In one preferred embodiment, the reshapable thermoset resin material is obtained by first mixing the bifunctional epoxy resin and trifunctional epoxy resin in a standard beaker. For any air voids generated in the mixture during the mixing process, it is removed by degassing the resin by applying vacuum at room temperature in a vacuum oven. Benzotriazole is then added in the resin mixture which is uniformly dispersed in the resin mixture and forms a paste like viscous mixture. This mixture is heated with continuous stirring on a hot plate to melt and mix the benzotriazole into the epoxy resin. The mixture becomes transparent when benzotriazole is completely melts and mixed with the resin. This mixture is cooled to room temperature in order to avoid any excess cross-linking reaction. Once this mixture is completely cooled down at room temperature, imidazole is added to this mixture which is then degassed at room temperature under vacuum in an oven.

Any conventional mixing techniques, operated by appropriate mixing equipment, may be used to achieve mixing the aforementioned components.

The reshapable thermoset resin material as obtained by the present invention advantageously exhibits reshapability at a temperature from 90 °C to 200 °C, preferably at a temperature from 120 °C to 180 °C, more preferably at a temperature from 140 °C to 150 °C.

The reshapable thermoset resin material as obtained by the present invention advantageously exhibits glass transition temperature (Tg) from 70 °C to 150 °C, preferably from 90 °C to 130 °C, more preferably from 110 °C to 115 °C. Glass transition temperature (Tg) is measured according to ASTM D3418 at midpoint by differential scanning calorimetry (DSC) with a scan rate at 20 °C/min.

The reshapable thermoset resin material as obtained by the present invention advantageously exhibits tensile strength greater than or equal to 70 MPa, preferably greater than or equal to 85 MPa, more preferably greater than or equal to 99 MPa. Tensile strength is measured by Universal Testing Machine (UTM) (Zwick/Z030).

A second aspect of the present invention relates to a reshapable thermoset resin material obtained according to the process of the present invention.

The reshapable thermoset resin material is generally obtained by curing epoxy resin wherein curing is carried out with (a) at least one imidazole compound and (b) at least one benzotriazole compound according to the process of the present invention.

The reshapable thermoset resin material as obtained by the process of the present invention advantageously can be used for the manufacture of cured articles by forming, coating or impregnating an article with a composition comprising at least one epoxy resin, at least one imidazole and at least one benzotriazole compound as described hereinbefore, and curing at elevated temperature. The cured products adhere very well to a large variety of substrates, such as steel, aluminum, glass, wood, concrete and the composition can be used as adhesives for such materials, for encapsulating electrical apparatus and parts thereof, and for making castings, laminates, molded articles and coatings.

The method according to the present invention overcomes the drawbacks of the prior art processes and has numerous advantages. It provides a reshapable thermoset resin material which is obtained without the use of any solvents and thereby does not form any impurities and eliminates the process of purification, The reshapable thermoset resin material as obtained by the process of the present invention involves very less working time, sustainable and can be reshaped several times for reuse.

The reshapability is obtained at a temperature above 150 °C. The obtained thermoset resin material has high glass transition temperature (Tg) above 110 °C, high tensile strength above 85 MPa, good thermomechanical stability, excellent shape recovery, fast curing kinetics, high solvent resistance, high repeatability and high strain.

The examples provided here further describe and demonstrate embodiments of the present invention. The examples are given solely for the purpose of illustration and are not to be construed as limitation of the present invention.

### EXAMPLES (according to the invention)

The following example illustrates the process for the preparation of reshapable thermoset material.

### Materials:

For the preparation of the thermoset material, the following starting materials were used: Bi-functional epoxy (LAPOX^{®} B11 (3101)), Atul Ltd; Tri-functional epoxy (Araldite^{®} MY 0510 CH), Huntsman; Benzotriazole (BTA), Sigma Aldrich; 1-methyl Imidazol (IM), Sigma Aldrich.

DSC technique is used to measure different characteristics of the reshapable thermoset material. Instrument used is TA Instrument (Q2000).

Universal Testing Machine (UTM) is used to determine mechanical properties. Instrument used is Zwick-Z030.

### Stoichiometry:

The epoxy resins, benzotriazole and imidazole stoichiometry is summarized in Table 1. The stoichiometry refers to the relationship between the quantities of the materials taken during the experiment.

**Table 1**

| **Materials** | **Stoichiometry** |
|---|---|
| Bi-functional Epoxy (EEW 190) (70%) + Tri-functional epoxy (TFE) (30%) | 100 phr |
| 1-Methyl Imidazole (IM) | 1. 5phr |
| Benzotriazole (BTA) | 20phr |

### Mixing Protocol:

Bi-functional and tri-functional epoxy materials were weighted as per the stoichiometry and mixed thoroughly in a beaker. Mixture of bi-functional and tri-functional epoxy mixture was allowed to settle. In case of air voids entrapment during mixing process, the resin was degassed by applying vacuum at room temperature in a vacuum oven. Benzotriazole (BTA) was weighted as per the stoichiometry and added in the resin mixture. Benzotrazole was thoroughly dispersed in the epoxy mixture and paste type viscous mixture was formed. Since benzotriazole was solid, at this stage benzotriazole was not soluble in epoxy and remained in the dispersed form only. This mixture was heated at 60 °C with continues stirring on hot plate for <1-2 minutes to melt and mix benzotriazole in epoxy mixture. After complete melting of benzotriazole, the mixture became transparent. Immediately the mixture was cooled to room temperature to avoid further cross-linking reaction. After mixture was cooled down to room temperature, methyl imidazole (MI) was added as per stoichiometry to the resin mixture and mixed thoroughly. The resulting resin and hardener mixture (benzotriazole and methyl imidazole) was degassed for 15 minutes at room temperature under vacuum in the oven. The resin was poured in the silicone mold to form a specimen for the testing.

### Curing Protocol:

| | |
|---|---|
| Hold | : 24 h at room temperature |
| Hold | : 1 h at 80°C |
| Ramp | : 80 °C to 160 °C in ~1 h (80 °C→120 °C→160 °C) |
| Hold | : 2 h at 160 °C |

After pouring resin and hardener mixture in silicon mold, it was allowed to cure at room temperature for 24 h. After initial room temperature cure, material further cured at 80 °C for 1 h in oven. After 1 h at 80 °C, temperature was slowly increased to reach oven from 80 °C to 160 °C within 1 h. At 160 °C, material was further cured for 2 h. After curing process, the material was allowed to cool down and equilibrate to room temperature overnight before proceeding for any characterization.

Afterwards, a sample was taken to determine the different properties of the formulation.

### Reshapable Property:

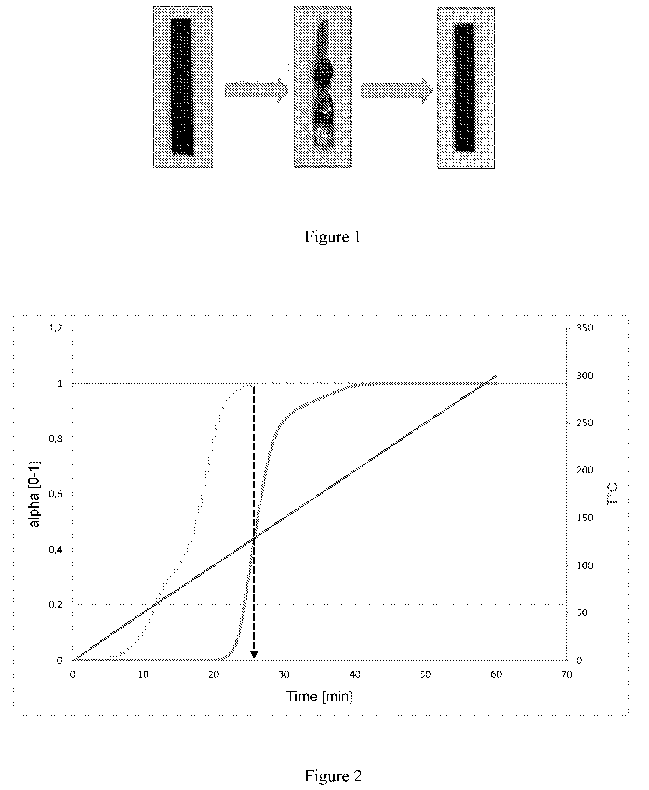

To mold the sample in shape, a rectangular shape aluminum thin sheet mold cavity was prepared. The sample was first heated at 150 °C in the cavity made by aluminum sheet to shape the article. Once the article is made, the sample was again heated at 140 °C to reshape the article. The original shape was recovered in 60 seconds. The reshapability effect is expressed in Figure 1.

It appears that the formulation has obtained an excellent reshapability/ reversibility at elevated temperatures. The reshapability is obtained at 140 °C.

### Thermal and mechanical property

A sample was taken for DSC analysis (TA Instrument - Q2000) and UTM (Zwick-Z030) to determine thermal properties and mechanical properties respectively. The results are expressed in Table 2.

**Table 2**

| **Property** | **Value** |
|---|---|
| Appearance | Brown Solid |
| Curing Temperature (°C) | 80-160 |
| Glass transition temperature Tg (°C) | 110-115 |
| Tensile Strength (MPa) | 99 |
| Fracture Strain (%) | 6 |
| Storage Modulus (GPa) | 2.4 |
| Wt% change on water absorption after 520 Hrs | 1.5 |
| Reshapability Temperature (°C) | 140-150 |
| Thermal degradation Temperature T_{d} (5 wt% loss) | 365 |
| Lap Shear Strength (LSS) | 10.9 |
| Acetone solubility (visual observation) | No |
| Viscosity (Pa.s) | 0.25 |

It appears from the Table 2 that the sample has obtained an excellent property with glass transition temperature of 115 °C, tensile strength 99 MPa, fracture strain 6%, storage modulus 2.4 GPa, low water uptake 1.5% after 520 h and reshapability above 150 °C.

### Curing Kinetics

DSC analysis (TA Instrument - Q2000) was performed on the sample at different ramp rate to understand the curing kinetics of the sample.

Ramp rate 1 °C/min, 3 °C/min, 5 °C/min and 10.00 °C/min to 350.00 °C.

Curing kinetics is shown in Figure 2.

In Figure 2, the light curved line represents the formulation according to the present invention; the dark curved line represent the standard formulation (IM/Dicyandiamide cured); the dotted line represents the point at which curing starts for the formulation according to the present invention; the diagonal line represents ramp rate temperature which is followed in the analysis.

It appears that the curing of the formulation according to the present invention ends with maximum curing at 25 min whereas the curing of the standard formulation ends with maximum curing at 40 min. Therefore, formulation according to the present invention has fast curing kinetics when compared to the commercial fast curing formulation (IM/Dicyandiamide cured).

### Shelf life study

A sample was taken for DSC analysis (TA Instrument - Q2000) to determine shelf life at sub-ambient temperature. Results are expressed in Table 3.

**Table 3**

| **Shelf-life condition** | **% Cross-linking** | **Physical nature** |
|---|---|---|
| After 24h at 0° C | 12% | Viscous liquid# |
| After 24h at 5° C | 25% | Viscous liquid# |

| | | |
|---|---|---|
| # after 24h under shelf life condition, increase in viscosity was observed in comparison to 0 hour viscosity. | | |

It appears that the formulation stored at 0 °C and 5 °C for 24h show some percentage of cross-linking and increase in viscosity. It gives maximum flexibility and optimum physical properties of the cured resins.

According to the above results, the applicant is able to prepare a reshapable thermoset resin material by curing epoxy resin with a curable amount of benzotriazole compound and imidazole compound. The reshapable thermoset resin material obtained by the process of the present invention has excellent thermal and mechanical properties with glass transition temperature (Tg) at 115 °C, tensile strength of 99 MPa, fracture strain of 6%, storage modulus of 2.4 GPa, thermal degradation temperature (Td) 365 and lap shear strength (LSS) of 10.9. The reshapable thermoset resin material obtained by the above process of invention has a reshapability at 140 °C, fast curing kinetics and an excellent solvent resistance.

It provides a thermoset resin material having reshapable property and an excellent glass transition temperature and tensile strength which makes it possible to be reverted and reshaped several times and it is possible to reuse these thermoset materials in automobiles, coating, adhesives and automotive parts.

## Claims

1. A process for preparing a reshapable thermoset resin material comprising curing epoxy resin wherein curing is carried out with (a) at least one imidazole compound and (b) at least one benzotriazole compound.

2. The process according to claim 1, wherein epoxy resin comprises one or more epoxy resins.

3. The process according to claim 1 or 2, wherein epoxy resin is a mixture of a bifunctional epoxy resin and a trifunctional epoxy resin.

4. The process according to any one of claims 1 to 3, wherein epoxy resin is a mixture of diglycidyl ether of bisphenol A (DGEBA) and triglycidyl para-aminophenol (TGAP).

5. The process according to claim 3 or 4, wherein bifunctional epoxy resin is added in amounts from 50 wt% to 90 wt% relative to the total quantity of epoxy resins.

6. The process according to any one of claims 3 to 5, wherein trifunctional epoxy resin is added in amounts from 25 wt% to 65 wt% relative to the total quantity of epoxy resins.

7. The process according to any one of claims 3 to 6, wherein amount of bifunctional epoxy resin is from 50 wt% to 90 wt% and amount of trifunctional epoxy resin is 50 wt% to 10 wt% in the mixture of bifunctional epoxy resin and trifunctional epoxy resin.

8. The process according to any one of claims 1 to 7, wherein the benzotriazole compound is added in amounts from 5 to 50 parts by weight per one hundred parts by weight of the epoxy resin.

9. The process according to any one of claims 1 to 8, wherein the imidazole compound is added in amounts from 0.1 to 3.5 parts by weight per one hundred parts by weight of the epoxy resin.

10. The process according to any one of claims 1 to 9, wherein imidazole compound is 1-methyl imidazole.

11. The process according to any one of claims 1 to 10, wherein epoxy resin and benzotriazole compound are mixed first and imidazole compound is added to the mixture.

12. A reshapable thermoset resin material obtained by the process according to any one of claims 1 to 11.

## Patentansprüche

1. Verfahren zur Herstellung eines umformbaren duroplastischen Harzmaterials, umfassend Härten von Epoxidharz, wobei Härten mit (a) wenigstens einer Imidazolverbindung und (b) wenigstens einer Benzotriazolverbindung durchgeführt wird.

2. Verfahren nach Anspruch 1, wobei Epoxidharz ein oder mehrere Epoxidharze umfasst.

3. Verfahren nach Anspruch 1 oder 2, wobei Epoxidharz ein Gemisch eines bifunktionellen Epoxidharzes und eines trifunktionellen Epoxidharzes ist.

4. Verfahren nach einem der Ansprüche 1 bis 3, wobei Epoxidharz ein Gemisch von Diglycidylether von Bisphenol A (DGEBA) und Triglycidyl-para-aminophenol (TGAP) ist.

5. Verfahren nach Anspruch 3 oder 4, wobei bifunktionelles Epoxidharz in Mengen von 50 Gew.-% bis 90 Gew.-%, bezogen auf die Gesamtmenge von Epoxidharzen, zugegeben wird.

6. Verfahren nach einem der Ansprüche 3 bis 5, wobei trifunktionelles Epoxidharz in Mengen von 25 Gew.-% bis 65 Gew.-%, bezogen auf die Gesamtmenge von Epoxidharzen, zugegeben wird.

7. Verfahren nach einem der Ansprüche 3 bis 6, wobei in dem Gemisch von bifunktionellem Epoxidharz und trifunktionellem Epoxidharz die Menge an bifunktionellem Epoxidharz 50 Gew.-% bis 90 Gew.-% beträgt und die Menge an trifunktionellem Epoxidharz 50 Gew.-% bis 10 Gew.-% beträgt.

8. Verfahren nach einem der Ansprüche 1 bis 7, wobei die Benzotriazolverbindung in Mengen von 5 bis 50 Gew.-Teilen pro Einhundert Gewichtsteile des Epoxidharzes zugegeben wird.

9. Verfahren nach einem der Ansprüche 1 bis 8, wobei die Imidazolverbindung in Mengen von 0,1 bis 3,5 Gew.-Teilen pro Einhundert Gewichtsteile des Epoxidharzes zugegeben wird.

10. Verfahren nach einem der Ansprüche 1 bis 9, wobei die Imidazolverbindung 1-Methylimidazol ist.

11. Verfahren nach einem der Ansprüche 1 bis 10, wobei Epoxidharz und Benzotriazolverbindung zuerst gemischt werden und Imidazolverbindung zu dem Gemisch zugegeben wird.

12. Umformbares duroplastisches Harzmaterial, erhalten durch das Verfahren nach einem der Ansprüche 1 bis 11.

## Revendications

1. Procédé de préparation d'un matériau de résine thermodurcissable reprofilable comprenant le durcissement d'une résine époxy, dans lequel le durcissement est effectué avec (a) au moins un composé imidazole et (b) au moins un composé benzotriazole.

2. Procédé selon la revendication 1, dans lequel la résine époxy comprend une ou plusieurs résines époxy.

3. Procédé selon la revendication 1 ou 2, dans lequel la résine époxy est un mélange d'une résine époxy bifonctionnelle et d'une résine époxy trifonctionnelle.

4. Procédé selon l'une quelconque des revendications 1 à 3, dans lequel la résine époxy est un mélange d'éther diglycidylique de bisphénol A (DGEBA) et de triglycidyl-para-aminophénol (TGAP).

5. Procédé selon la revendication 3 ou 4, dans lequel une résine époxy bifonctionnelle est ajoutée en des quantités de 50 % en poids à 90 % en poids par rapport à la quantité totale de résines époxy.

6. Procédé selon l'une quelconque des revendications 3 à 5, dans lequel une résine époxy trifonctionnelle est ajoutée en des quantités de 25 % en poids à 65 % en poids par rapport à la quantité totale de résines époxy.

7. Procédé selon l'une quelconque des revendications 3 à 6, dans lequel la quantité de résine époxy bifonctionnelle est de 50 % en poids à 90 % en poids et la quantité de résine époxy trifonctionnelle est de 50 % en poids à 10 % en poids dans le mélange de résine époxy bifonctionnelle et de résine époxy trifonctionnelle.

8. Procédé selon l'une quelconque des revendications 1 à 7, dans lequel le composé benzotriazole est ajouté en des quantités de 5 à 50 parties en poids pour cent parties en poids de la résine époxy.

9. Procédé selon l'une quelconque des revendications 1 à 8, dans lequel le composé imidazole est ajouté en des quantités de 0,1 à 3,5 parties en poids pour cent parties en poids de la résine époxy.

10. Procédé selon l'une quelconque des revendications 1 à 9, dans lequel le composé imidazole est le 1-méthylimidazole.

11. Procédé selon l'une quelconque des revendications 1 à 10, dans lequel une résine époxy et un composé benzotriazole sont mélangés en premier et un composé imidazole est ajouté au mélange.

12. Matériau de résine thermodurcissable reprofilable obtenu par le procédé selon l'une quelconque des revendications 1 à 11.
